# EUROPEAN PATENT APPLICATION

(11) **EP 4 311 461 A1**
(43) Date of publication of application: **31.01.2024**
(21) Application number: 23185537.0
(22) Date of filing: 14.07.2023
(51) Int. Cl.: A47K 1/04, A47K 1/14, A47K 3/40, E03C 1/18, E03C 1/22, E03F 5/04, B29C 45/00

(54) **COVER DRAIN, SHOWER TRAY AND BASIN MADE OF POLYETHYLENE TEREPHTHALATE**

(30) Priority: 29.07.2022 IT 202200016182
(71) Applicant: Cominotti S.r.l., 25071 Agnosine Brescia (IT)
(72) Inventor: COMINOTTI, Michele, 25071 Agnosine, BRESCIA (IT)
(74) Representative: Gualeni, Nadia

(57) **Abstract**

The cover drain 2, the shower tray 3 and the basin 4 as per the present invention consist of a full body made of polyethylene terephthalate. These bathroom objects are advantageously completely recyclable, strong and have a level of aesthetics and robustness that is typical of high-end bathroom accessories. In fact, they do not absorb bad odors and therefore prevent them; they do not turn yellow and remain aesthetically pleasing over time; they are very resistant to impacts and are solid, like high-end accessories, despite having low production costs.

## Description

The present invention relates to a new cover drain for a shower tray or for a basin and to a new shower tray and a new basin.

Within the bathroom furnishings sector, particular attention is paid to the materials used, which must ensure high levels of strength and quality. In addition to aesthetics and functionality, safety with regard to the user's health and well-being is also a greatly important aspect within the sector.

Referring to the shower tray, but the same considerations also apply to the basin or to the corresponding cover drain, the shower train is selected on the basis of structural features, such as the shape and material, that have to ensure safety everyday use as well as strength and durability over time without overlooking the stylistic features, especially in modern bathrooms..

The materials generally used to create a shower tray, a basin or a corresponding cover drain are ceramic, acrylic, steel, resin and stoneware. Some of these materials are porous and have the disadvantage of absorbing bad odors or stains; others are very fragile and risk being broken over time; others may still not be reusable or recoverable and must be disposed of in the appropriate way; others are very expensive.

It is therefore important to select a material that ensures strength and functionality and remains aesthetically pleasing over time. Furthermore, the disposal of bathroom accessories when they are no longer being used or when they are replaced is also especially important with regard to the ever-increasing attention paid to environmental protection.

The object of the present invention is to create a bathroom accessory, in particular a cover drain for a shower tray or basin, a shower tray and a basin, which is completely recyclable and at the same time ensures strength and functionality and is aesthetically pleasing.

This object is achieved by a bathroom accessory, in particular by a cover drain, by a shower tray and by a basin, as described, shown and claimed below. The dependent claims describe preferred or advantageous embodiments of the invention.

The features and advantages of the bathroom accessories according to the present invention will become clearer from the following description, given by way of non-limiting example and according to the attached drawings, in which:
- Fig. 1 shows a metal cover drain from the prior art applied to a resin shower tray from the prior art;

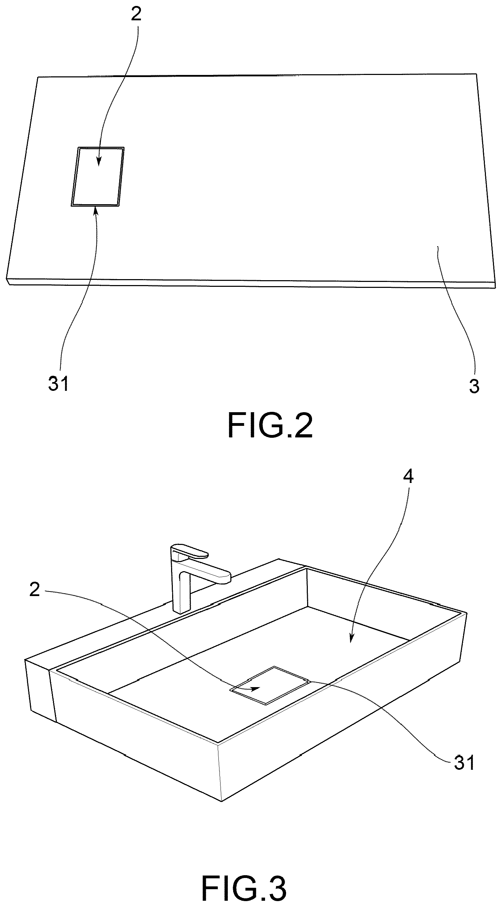

- Fig. 2 shows an example of a shower tray and a cover drain according to the present invention;
- Fig. 3 shows an example of a basin and a cover drain according to the present invention;
- Fig. 4a and 4b are a view from above and a view from below of an example of a square cover drain comprising drainage holes according to the present invention;
- Fig. 5a and 5b are a view from above and a view from below of an example of a round cover drain comprising drainage holes according to the present invention;
- Fig. 6a and 6b are a view from above and a view from below of an example of a rectangular cover drain comprising drainage holes according to the present invention;
- Fig. 7a and 7b are a view from above and a view from below of an example of a rectangular cover drain comprising a lateral drain according to the present invention;

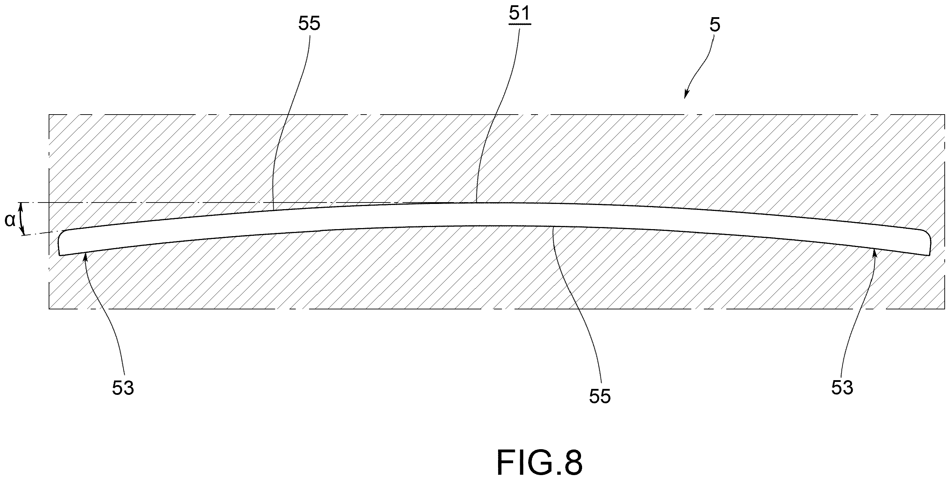

- Fig. 8 shows a mold cavity for creating a rectangular cover drain according to the present invention.

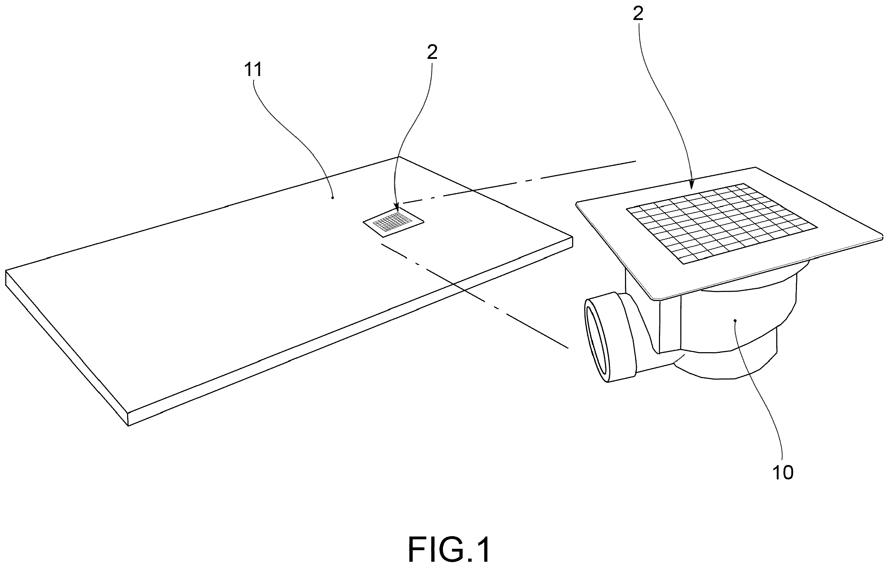

Fig. 1 shows a cover drain applied to a shower tray 11. The cover drain 2 is a shield applied to the mouth of the drain 10, whether it be a drain of a shower or basin, suitable for preventing objects or debris from falling or dropping into drain itself.

With reference to the attached drawings, reference numeral 2 indicates a cover drain for a shower or basin as a whole, reference numeral 3 indicates a shower tray as a whole and reference numeral 4 indicates a basin as a whole according to the present invention.

The cover drain 2 is a plate provided with a cover drain body 21.

In the embodiments in Fig. 1, 4a, 5a and 6a, the cover drain 2 is provided with through holes 211 through the cover drain body 21, suitable for allowing water to drain towards the drain.

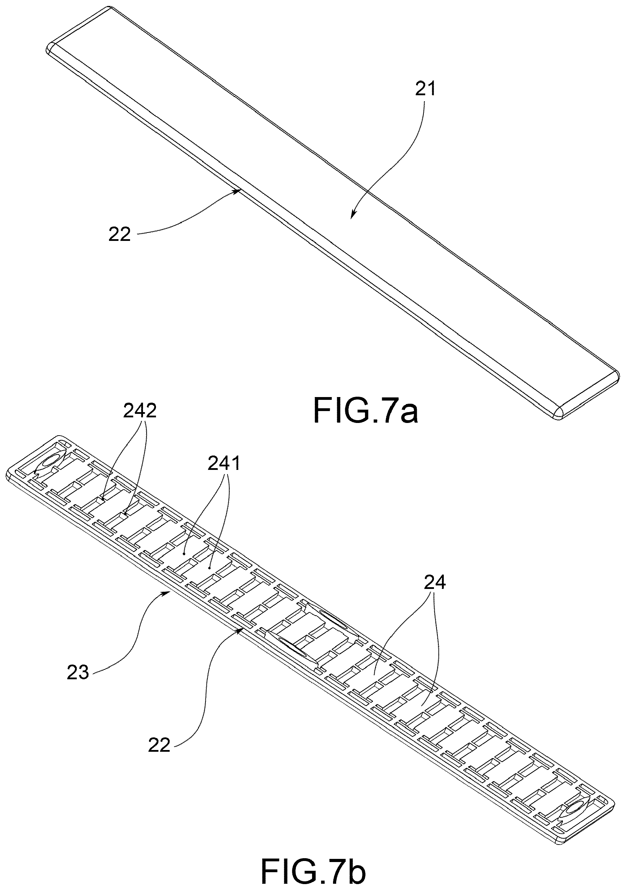

In the example in Fig. 7a, the cover drain 2 is a plate devoid of through holes. In this example, the cover drain body 21 is a plate provided with a recess 22, which is formed along the perimeter and allows water to drain towards the drain below it.

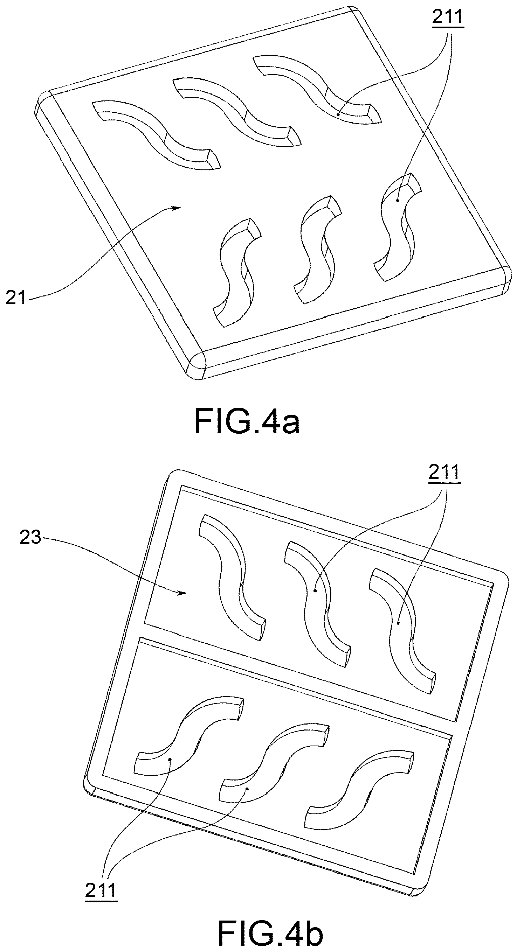

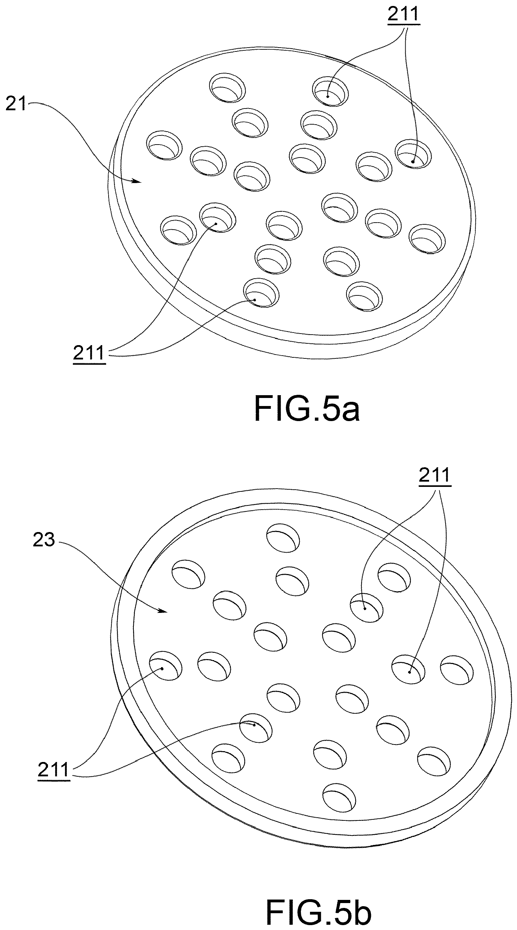

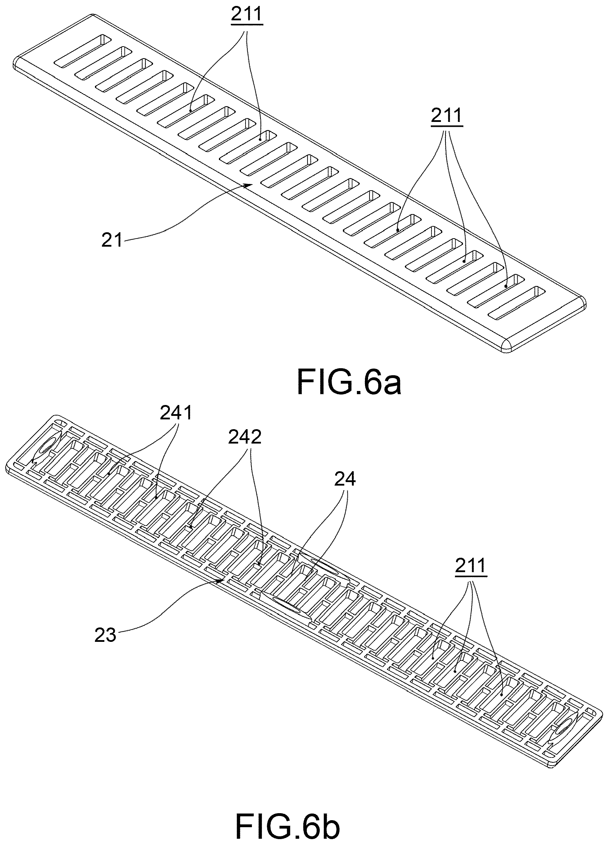

The cover drain body 21 may be square (Fig. 4a), rectangular (Fig. 6a and 7a), circular (Fig. 5a) or a different shape.

In the example in Fig. 7a, the cover drain 2 has a cover drain body 21 in the form of a rectangular plate, with a recess 22 at a flank of a long side.

Preferably, the cover drain body 21, at a rear side 23, is provided with reinforcing ridges 24suitable for giving the cover drain 21 mechanical strength and counteracting the deformation associated with the shrinkage of the material at the end of the molding step.

For example, the reinforcing ridges 24 create a reinforcing grid, as in the example in Fig. 6b.

Preferably, the cover drain body 21 is provided with both transverse reinforcing ridges 241, which extend in the transverse direction, and longitudinal reinforcing ridges 242, which extend in the longitudinal direction, as in the examples in Fig. 6b and 7b.

The mold 5, which creates the cover drain 2, has a molding cavity 51 defined between an upper plane 55 which realizes the upper side of the cover drain and a lower plane 56 which realizes the rear side 23 of the cover drain 2. In order to counteract the deformation associated with the shrinkage of the material at the end of the molding step, the molding cavity 51 is deformed, that is has a bending opposite to the shrinkage direction of the material. The upper plane 55 and the lower plane 56 of the molding cavity 51 have a downward curvature, from the center to the ends 53, by an angle α of about 5° with respect to the plane.

The shower tray 3 is generally rectangular or square and is provided with a drainage opening 31, into which the cover drain 2 is inserted.

The basin 4 is concave, has various shapes and dimensions, and is provided with a drainage opening 31 into which the cover drain 2 is inserted. The basin 4 may also be surrounded, at least in part, by a basin plane created in one piece with said basin 4.

The cover drain 2, the shower tray 3 and the basin according to the present invention are made of polyethylene terephthalate. PET is a well-known material in the field of food, cosmetics and pharmacological packaging, but it has never been considered for making bathroom accessories, such as the cover drain 2, the shower tray 3 and the basin 4. As a matter of fact, as it is lightweight and naturally transparent as well as suitable for contact with food, it has always been a material associated with food, cosmetics and pharmacological packaging. However, precisely these features of being lightweight and transparent, far from the robust nature and white color that are typical of high-end bathroom accessories, have meant it has never been intended for the production of said bathroom accessories.

Preferably, the material used is recycled polyethylene terephthalate (R-PET). Recycled polyethylene terephthalate R-PET (Recycled PET) is a polymer obtained through processes of recovering and recycling common PET, which involve sorting, washing, shredding and melting plastics materials. Preferably, the material used is recycled polyethylene terephthalate (R-PET) obtained from post-consumer PET bottle flakes and/or PET bottle scraps from industrial production.

Preferably, the polyethylene terephthalate (PET) or recycled polyethylene terephthalate (R-PET) has an intrinsic viscosity (1% w/vol DCA) between 0.5 and 0.11 dL/g, preferably about 0.8 dL/g.

Preferably, the polyethylene terephthalate (PET) or recycled polyethylene terephthalate (R-PET) has a density between 1.0 g/cm3 and 1.6 g/cm3, preferably about 1.3 g/cm3.

Preferably, the polyethylene terephthalate (PET) or recycled polyethylene terephthalate (R-PET) has a melting point between 245°C and 265°C, preferably about 255°C.

Preferably, the polyethylene terephthalate (PET) or recycled polyethylene terephthalate (R-PET) comprises acetaldehyde in an amount of < 3 ppm, preferably < 1.5 ppm, as measured by the MC_PET-009 method.

Preferably, dye is added to the polyethylene terephthalate (PET) or recycled polyethylene terephthalate (R-PET) for a better aesthetic appearance of the toilet seat 1. Preferably, the dye is white.

The cover drain 2, the shower tray 3 and the basin 4 according to the present invention are produced by injection molding.

Preferably, to avoid obvious scratches, the surface finish is not smooth and glossy, but rough and opaque. Preferably, the surface finish is obtained directly by molding.

The cover drain 2, the shower tray 3 and the basin 4 according to the present invention consist of a full body made solely of polyethylene terephthalate by means of injection molding: that is there are no layers and no other materials have been added thereto.

The production of the cover drain 2, the shower tray 3 and the basin 4 does not require a painting step: the color is in fact obtained by directly adding a coloring pigment to the polyethylene terephthalate during the injection molding step. For example, the white dye pigment is added to the polyethylene terephthalate at a rate of 5% to 10%, preferably 8%. For example, for colors other than white, the color pigment is added to the polyethylene terephthalate at a rate of less than 5%, preferably 4%. Preferably, the colorant pigment is a PET-based colorant, resulting in a fully recyclable seat.

The cover drain 2, the shower tray 3 and the basin 4 according to the present invention consist of a single polyethylene terephthalate body that is obtained by injection molding and does not require subsequent processing, such as deburring, polishing and other surface treatments.

The cover drain 2, the shower tray 3 and the basin 4 according to the present invention consist of a single entirely recyclable full body made exclusively of recycled polyethylene terephthalate.

The cover drain 2, the shower tray 3 and the basin 4 according to the present invention are completely recyclable.

The object of the present invention therefore is a cover drain 2, a shower tray 3 and a basin 4 in the form of a full body made of polyethylene terephthalate, preferably recycled polyethylene terephthalate (R-PET).

The object of the present invention is also a method for producing a cover drain 2, a shower tray 3 and a basin 4, comprising the step of injection molding said cover drain or said shower tray or said basin in the form of a full body made of polyethylene terephthalate, preferably recycled polyethylene terephthalate (R-PET).

The object of the present invention is also the use of polyethylene terephthalate to produce a cover drain 2, a shower tray 3, a basin 4, wherein said cover drain or said shower tray or said basin are a full body made of polyethylene terephthalate, preferably recycled polyethylene terephthalate body (R-PET).

Advantageously, a cover drain 2, a shower tray 3 and a basin 4 according to the present invention are entirely recyclable, strong and have a level of aesthetics and robustness that is typical of high-end bathroom accessories. As a matter of fact, they do not absorb bad odors and therefore prevent them; they do not turn yellow and remain aesthetically pleasing over time; they are very resistant to impacts and are solid, like high-end accessories, despite having low production costs.

Advantageously, a cover drain 2, a shower tray 3 and a basin 4 made of recycled polyethylene terephthalate are eco-friendly since the material they are made from comes from post-consumer PET bottle flakes and/or mass-produced PET bottle flakes.

Advantageously, a cover drain 2, a shower tray 3 and a basin 4 according to the present invention are produced by injection molding, which makes it possible to provide a range of shapes and dimensions for the product and makes it possible to obtain a high level of repeatability and increased productivity.

It is understood that a person skilled in the art could make modifications to the device described above, all of which are contained within the scope of protection as defined by the following claims.

## Claims

1. A cover drain (2) for covering a shower tray or sink drain, consisting of a full body made of injection molded polyethylene terephthalate.

2. Cover drain (2) according to claim 1, wherein the polyethylene terephthalate is recycled polyethylene terephthalate (R-PET).

3. Cover drain (2) according to any one of the preceding claims, wherein the polyethylene terephthalate has:
- an intrinsic viscosity (1% w/vol DCA) comprised between 0.5 and 0.11 dL/g, preferably of about 0.8 dL/g; and/or
- a density comprised between 1.0 g/cm3 and 1.6 g/cm3, preferably of about 1.3 g/cm3, and/or
- a melting point comprised between 245°C and 265°C, preferably of about 255°C.

4. Cover drain (2) according to any one of the preceding claims, wherein the polyethylene terephthalate comprises acetaldehyde in the amount of < 3 ppm, preferably < 1.5 ppm, measured with the MC_PET-009 method.

5. Cover drain (2) according to any one of the preceding claims, having a cover drain body (21) provided, on a rear side (23), with reinforcing ridges (24) forming a rear reinforcing grid.

6. A method for producing a cover drain (2) according to any one of claims 1 to 5, by means of injection molding in a mold (5) having a molding cavity (51) defined between an upper plane (55) creating an upper side of the cover drain and a lower plane (56) creating a rear side of the cover drain, wherein said upper plane (55) and said lower plane (56) have a downward curvature, from the center to the end (53), by an angle α of about 5°.

7. A shower tray (3) consisting of a full body made of polyethylene terephthalate or injection molded recycled polyethylene terephthalate (R-PET).

8. Shower tray (3) according to claim 7, wherein the polyethylene terephthalate has:
- an intrinsic viscosity (1% w/vol DCA) comprised between 0.5 and 0.11 dL/g, preferably of about 0.8 dL/g; and/or
- a density comprised between 1.0 g/cm3 and 1.6 g/cm3, preferably of about 1.3 g/cm3, and/or
- a melting point comprised between 245°C and 265°C, preferably of about 255°C.

9. Shower tray (3) according to claim 7 or 8, wherein the polyethylene terephthalate comprises acetaldehyde in the amount of < 3 ppm, preferably < 1.5 ppm, measured with the MC_PET-009 method.

10. A basin (4) consisting of a full body made of polyethylene terephthalate or injection molded recycled polyethylene terephthalate (R-PET).

11. Basin (4) according to claim 9, wherein the polyethylene terephthalate has:
- an intrinsic viscosity (1% w/vol DCA) comprised between 0.5 and 0.11 dL/g, preferably of about 0.8 dL/g; and/or
- a density comprised between 1.0 g/cm3 and 1.6 g/cm3, preferably of about 1.3 g/cm3, and/or
- a melting point comprised between 245°C and 265°C, preferably of about 255°C.

12. Basin (4) according to claim 10 or 11, wherein the polyethylene terephthalate comprises acetaldehyde in the amount of < 3 ppm, preferably < 1.5 ppm, measured with the MC_PET-009 method.
